# FASCICULE DE BREVET EUROPEEN

(11) **EP 1 503 192 B1**
(45) Date de publication et mention de la délivrance du brevet: **01.05.2013**
(21) Numéro de dépôt: 04291708.8
(22) Date de dépôt: 06.07.2004
(51) Int. Cl.: G01J 3/453

(54) **Spectrophotomètre comprenant un interferomètre et un système dispersif**
Spektrophotometer mit einem Interferometer und einem dispersiven System
Spectrophotometer comprising an interferometer and a dispersive system

(30) Priorité: 31.07.2003 FR 0309443
(43) Date de publication de la demande: 02.02.2005
(73) Titulaire: EADS ASTRIUM SAS, 31402 Toulouse Cedex 4 (FR)
(72) Inventeur: Pasternak, Frédérick, 31590 Gaure (FR)
(74) Mandataire: Cabinet Plasseraud

(56) Documents cités:
- US-A- 4 538 910
- US-A- 4 681 445
- US-B1- 6 351 307

## Description

La présente invention concerne un spectrophotomètre comprenant un interféromètre et un système dispersif. Elle concerne plus particulièrement un tel spectrophotomètre adapté pour être embarqué à bord d'un véhicule, d'un vaisseau spatial ou d'un satellite.

Il existe de nombreux types de spectrophotomètres ayant des caractéristiques de résolution spectrale, d'encombrement, de poids et de commodité d'utilisation différentes.

Les spectrophotomètres basés sur l'utilisation d'un prisme ou d'un réseau de diffraction comme élément dispersif sont les plus simples, mais la résolution spectrale de certains de ces systèmes est limitée par l'ouverture angulaire à l'intérieur de laquelle une lumière incidente est dispersée. De plus, la résolution de tels spectrophotomètres est en général proportionnelle à une distance focale d'une optique de focalisation de la lumière transmise par le spectrophotomètre. Une résolution élevée nécessite une grande distance focale, dont résulte un encombrement important.

Les spectrophotomètres dits à transformation de Fourier fournissent un interférogramme à partir duquel est calculée une distribution spectrale d'énergie lumineuse. Pour certains des spectrophotomètres de cette catégorie et notamment des spectrophotomètres qui comprennent un interféromètre de Michelson connu de l'homme du métier, l'interférogramme est obtenu en enregistrant des variations d'un éclairement lumineux pendant le déplacement d'un élément optique mobile. L'élément optique mobile est en général un miroir. Il doit être déplacé de façon très précise et très contrôlée, ce qui est souvent réalisé à l'aide d'un moteur pas-à-pas. Or certains détecteurs lumineux qui sont utilisés dans ces systèmes nécessitent que les déplacements de l'élément optique mobile soient lents. La durée d'acquisition de l'interférogramme est alors longue. De tels spectrophotomètres sont donc incompatibles avec des conditions d'utilisation rapide. De plus, ils sont relativement complexes, du fait du mécanisme de déplacement de l'élément optique mobile.

Un but de la présente invention est de proposer un spectrophotomètre qui ne présente pas les inconvénients précités.

L'invention est divulguée par les caractéristiques de la revendication 1.

Un avantage d'un spectrophotomètre selon l'invention réside dans le fait qu'il ne comporte aucun élément mobile qui ait un rôle interférentiel. De ce fait, sa constitution est plus simple et son coût réduit.

Un autre avantage réside dans les faibles dimensions que peut avoir un tel spectrophotomètre. Son transport et son utilisation à bord d'un véhicule, d'un vaisseau ou d'un satellite, sont par conséquent facilités.

Le document US 6,351,307 produit une figure d'interférence bi-dimensionnelle à partir d'une scène, mais ne possède aucune fonction d'imagerie.

D'autres particularités et avantages de la présente invention apparaîtront dans la description ci-après de plusieurs exemples de réalisation non limitatifs, en référence aux dessins annexés, dans lesquels :
- la figure 1a est un schéma optique de principe d'un spectrophotomètre selon l'invention ;
- la figure 1b représente une matrice de photodétecteurs pouvant être utilisée dans le spectrophotomètre de la figure 1a ;
- la figure 2a est un exemple de diagramme d'éclairement reçu par une ligne de photodétecteurs de la matrice de la figure 1b ;
- la figure 2b illustre un exemple de variation d'une différence de longueur de trajet optique pour le spectrophotomètre de la figure 1a ;
- la figure 2c représente un segment de spectre brut associé au diagramme d'éclairement de la figure 2a ;
- la figure 2d est un exemple de diagramme de fonction d'appareil associée aux lignes de photodétecteurs de la matrice de la figure 1b ;
- la figure 2e représente un segment de spectre corrigé associé au segment de spectre brut de la figure 2c ;
- la figure 2f illustre un exemple de regroupement de segments de spectre corrigés ;
- la figure 3a est une vue en perspective d'un miroir à échelette pouvant être utilisé dans le spectrophotomètre de la figure 1a ;
- la figure 3b est un exemple de diagramme de variation de la différence de longueur de trajet optique pour un spectrophotomètre selon la figure 1a équipé du miroir de la figure 3a ;
- la figure 4 est un schéma optique de principe d'un interféromètre pouvant être utilisé dans le spectrophotomètre de la figure 1a.

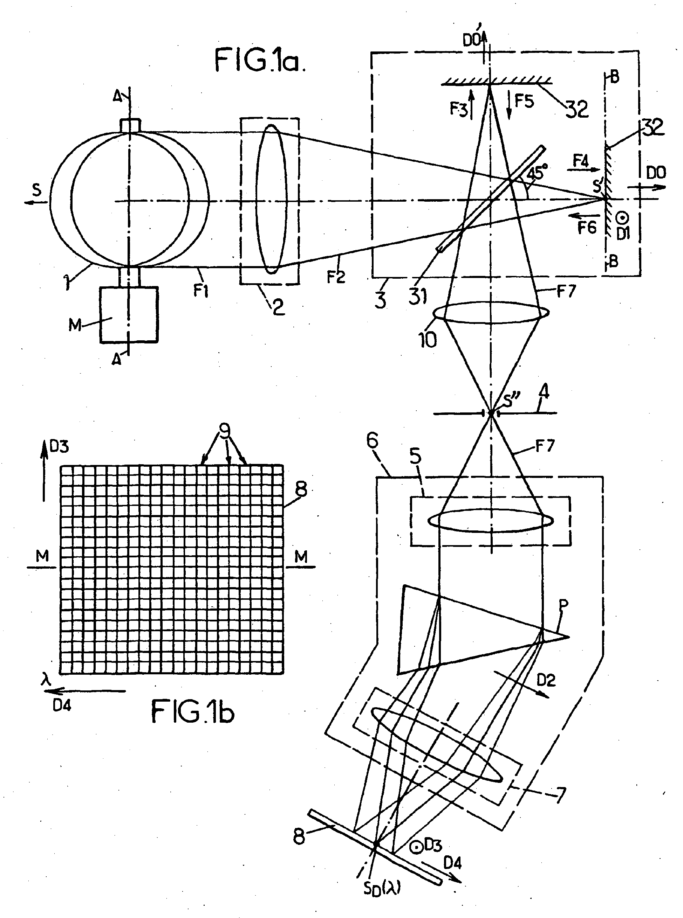

Pour raison de clarté, les dimensions des éléments optiques représentés dans les figures 1a, 1b, 3a et 4 et les distances entre ces éléments ne sont pas en proportion avec des dimensions et des distances réelles.

Par ailleurs, dans ce qui suit, les éléments optiques connus de l'homme du métier ne sont pas décrits en détail. Des indications sont seulement données concernant leur utilisation au sein d'un spectrophotomètre conforme à la présente invention.

Les éléments optiques d'un spectrophotomètre selon le mode de réalisation préféré de l'invention sont maintenant successivement décrits, selon leur ordre de disposition par rapport à la propagation de la lumière.

Conformément à la figure 1a, un dispositif de balayage optique 1 est disposé pour tourner autour d'un axe de rotation A-A sous l'action d'un moteur M. De façon connue, une ouverture d'entrée du dispositif de balayage 1 parcourt un champ angulaire dans lequel se trouve une source lumineuse S destinée à être observée. Le dispositif de balayage 1 délivre en sortie un faisceau lumineux d'entrée F1 qui possède une direction de propagation sensiblement parallèle à une direction D0 fixe par rapport au spectrophotomètre. La direction D0 est perpendiculaire à l'axe A-A.

Dans la configuration représentée sur la figure 1a, la source S est située à grande distance du dispositif de balayage 1. Seule la direction dans laquelle se situe la source S est donc représentée. Dans le jargon de l'homme du métier, la source S est dite «située à l'infini». Il est entendu que le principe du fonctionnement détaillé ci-après pour une source S située à l'infini est transposable au cas d'une source S située à distance finie. Les modalités d'une telle transposition, qui ne sont pas spécifiques au système décrit, sont bien connues.

Une optique d'entrée 2 transforme le faisceau F1 en faisceau primaire convergent F2 formant une image S' de la source S.

Un interféromètre 3 est disposé de façon à recevoir en entrée le faisceau primaire F2. Il délivre en sortie un faisceau lumineux intermédiaire F7.

Une optique intermédiaire 10 est placée dans le faisceau intermédiaire F7 de façon à produire une image S" de la source S. Une fente rectangulaire 4 est disposée au niveau de l'image S", dans un plan sensiblement perpendiculaire à la direction de propagation du faisceau intermédiaire F7.

Un système dispersif 6 est disposé de façon à recevoir en entrée le faisceau intermédiaire F7. Il peut comprendre une optique de collimation 5, un prisme P et une optique de focalisation 7 agencés de telle sorte que la lumière du faisceau intermédiaire F7 traverse successivement l'optique de collimation 5, le prisme P et l'optique de focalisation 7. Sur la figure 1a, les optiques 2, 5 et 7 sont symboliquement représentées par des lentilles, mais elles peuvent être chacune constituées d'un ensemble optique complexe. L'optique de collimation 5 est par exemple agencée de façon à transformer le faisceau intermédiaire F7 en un faisceau parallèle qui traverse le prisme P. L'optique de focalisation 7 est agencée pour former une image finale S_{D}(λ) de la source S dans un plan conjugué avec celui de la fente 4 par le système dispersif 6. Le prisme P disperse angulairement la lumière issue du faisceau intermédiaire F7 selon une direction D2 sensiblement perpendiculaire à la direction de propagation de la lumière. Des images S_{D}(λ) correspondant à des longueurs d'onde dispersées λ différentes sont ainsi formées, qui sont décalées entre elles selon une direction D4 conjuguée avec la direction de dispersion D2 par l'optique de focalisation 7.

Le prisme P peut être remplacé par un réseau de diffraction, sans changer le fonctionnement du spectrophotomètre.

Enfin, une matrice plane de photodétecteurs 8 est disposée dans le plan conjugué avec le plan de la fente 4 par système dispersif 6. Les images S_{D}(λ) sont donc formées sur la matrice 8. Conformément à la figure 1b, la matrice 8 peut être constituée de photodétecteurs répartis en lignes verticales 9 et horizontales.

De façon connue, la fente 4 joue le rôle de fente d'entrée du système dispersif 6. Chaque ligne de photodétecteurs 9 de la matrice 8 possède alors une fonction de fente de sortie du système dispersif 6.

L'interféromètre 3 est maintenant décrit en détail selon le mode de réalisation préféré de l'invention. Il s'agit d'un interféromètre du type Michelson qui comprend :
- un dispositif de séparation 31 par division d'intensité du faisceau primaire F2 en un premier F3 et un second F4 faisceaux secondaires ayant des directions de propagation respectives. Le dispositif de séparation 31 peut comprendre, par exemple, une lame semi-réfléchissante plane disposée à 45 degrés par rapport à la direction D0 ;
- deux miroirs 32 et 33 disposés de façon à réfléchir respectivement les faisceaux secondaires F3 et F4, pour former un premier et un second faisceaux secondaires réfléchis F5 et F6 ; et
- un dispositif de regroupement disposé pour regrouper les faisceaux secondaires réfléchis F5 et F6 afin de former le faisceau intermédiaire F7. De façon connue pour des interféromètres de type Michelson, le dispositif de séparation 31 remplit simultanément la fonction de regroupement des faisceaux secondaires réfléchis F5 et F6.

Sur la figure 1a, par souci de clarté, les faisceaux F3-F6 ne sont représentés que par leurs directions de propagation respectives.

Selon une possibilité de réalisation de l'invention, les miroirs 32 et 33 sont plans. Ils présentent chacun une inclinaison déterminée, respectivement par rapport aux directions de propagation des faisceaux secondaires F3 et F4. Le miroir 32 est par exemple perpendiculaire à la direction D0', D0' étant conjuguée avec la direction D0 par le dispositif de séparation 31. Le miroir 33 peut être incliné autour d'un axe B-B parallèle à l'axe A-A, ou conjugué avec ce dernier par l'optique d'entrée 2. L'angle d'inclinaison α du miroir 33 est par exemple compris entre 0,2 degré et 5 degrés.

Une différence de longueur de trajet optique résulte des inclinaisons respectives des miroirs 32 et 33, entre deux parties d'un même rayon lumineux du faisceau primaire F2 séparées par le dispositif 31. Ces parties de rayon lumineux appartenant respectivement aux faisceaux secondaires F3 et F4 sont chacune réfléchies par le miroir 32 ou 33. Les faisceaux secondaires réfléchis résultants F5 et F6 sont regroupés par le dispositif 31 dans le faisceau intermédiaire F7. Le faisceau intermédiaire F7 correspond donc à une figure d'interférence des faisceaux secondaires réfléchis F5 et F6. La différence entre les longueurs des trajets optiques des deux parties de rayon lumineux dépend de la position du point de réflexion de chacune d'elles sur les miroirs 32 et 33. Cette différence varie lors d'un déplacement du point de réflexion selon une direction perpendiculaire à l'axe B-B et à la direction de propagation D0. Cette direction de variation est désignée par direction principale de la figure d'interférence, et est référencée D1 sur la figure 1a. La direction principale D1 est aussi perpendiculaire à la direction de propagation du faisceau intermédiaire F7.

La distance entre l'interféromètre 3 et l'optique d'entrée 2 est en outre ajustée de sorte que l'image S' de la source S est formée à l'intérieur de l'interféromètre 3, sensiblement au niveau des miroirs 32 et 33. L'image S' correspond alors au point de réflexion du faisceau secondaire F4 sur le miroir 33.

En outre, le dispositif de balayage 1, l'interféromètre 3, la fente 4, le système dispersif 6 et la matrice 8 sont orientés chacun de sorte que :
- l'image S' se déplace parallèlement à la direction principale D1 lors d'une rotation du dispositif de balayage 1 autour de l'axe A-A ;
- la fente 4 présente une grande longueur parallèle au déplacement de l'image S" lors d'une rotation du système de balayage 1 ;
- la direction de dispersion D2 est sensiblement perpendiculaire à la direction principale D1 ; et
- les lignes 9 la matrice 8 sont parallèles à une direction D3 conjuguée avec la direction principale D1.

Pour le dispositif représenté sur la figure 1a, la grande longueur de la fente 4 est alors sensiblement parallèle à la direction principale D1, D3 est parallèle à D1, et la direction D4 de décalage des lignes 9 de la matrice 8 correspond à la direction de dispersion D2.

Le spectrophotomètre peut comprendre en outre une unité de calcul reliée aux photodétecteurs de la matrice 8 et ayant des moyens pour :
- enregistrer des valeurs d'éclairement lumineux reçu par chaque photodétecteur pour des positions successives du dispositif de balayage ;
- calculer une transformation de Fourier inverse à partir de valeurs d'éclairement reçu par des photodétecteurs respectifs d'une ligne de matrice correspondant à une valeur déterminée de longueur d'onde dispersée, un photodétecteur de ladite ligne étant sélectionné pour chaque position du dispositif de balayage de façon à ce que la valeur d'éclairement enregistrée pour ledit photodétecteur correspond à une même source lumineuse pour toutes les positions du dispositif de balayage, la transformation de Fourier inverse étant calculée par rapport à la différence de longueur de trajet optique évaluée pour chaque photodétecteur sélectionné, afin d'obtenir un segment de spectre brut indiquant une intensité pour des valeurs de longueur d'onde dudit segment de spectre brut ;
- diviser, pour chaque valeur de longueur d'onde dudit segment de spectre brut, l'intensité correspondante par une valeur de réponse d'instrument associée à ladite ligne de matrice et à ladite valeur de longueur d'onde, afin d'obtenir un segment de spectre corrigé ;
- regrouper plusieurs segments de spectre corrigés obtenus à partir de lignes de matrice différentes, d'une manière définie à partir des valeurs de longueur d'onde des segments de spectre corrigés.

Le spectrophotomètre précédent peut être adapté pour l'observation d'une source lumineuse S située à l'infini. Dans ce cas, l'interféromètre 3 est placé à une distance de l'optique d'entrée 2 telle que les miroirs 32 et 33 sont sensiblement situés dans un plan focal image de l'optique d'entrée 2, ou dans un plan conjugué avec le plan focal image de l'optique d'entrée 2.

Pour une application spatiale du spectrophotomètre, l'optique d'entrée 2 peut comprendre une optique de télescope. L'image S' est alors formée dans le plan focal de l'optique de télescope. Eventuellement, l'ensemble du spectrophotomètre peut être solidaire de l'optique de télescope, et le dispositif de balayage 1 peut être constitué par le télescope lui-même équipé d'un système d'orientation variable.

Le spectrophotomètre peut aussi être installé à bord d'un satellite. L'unité de calcul peut alors être reliée aux photodétecteurs et au dispositif de balayage 1 par une transmission radio.

L'utilisation du spectrophotomètre est maintenant décrite. Pour raison de clarté de l'exposé, une source lumineuse S ponctuelle est encore utilisée pour cette description. Le même principe s'appliquant pour des sources lumineuses situées dans des directions différentes de visée au télescope, une image bidimensionnelle est formée par le spectrophotomètre.

On identifie un objet à observer qui se comporte comme la source lumineuse S. On actionne alors le moteur M pour faire tourner le dispositif de balayage 1 autour de l'axe A-A, de sorte que le champ optique du dispositif de balayage 1 contienne une trace de la source S. Les images S', S" et S_{D}(λ) se déplacent alors chacune parallèlement à la direction principale D1 ou D3. Simultanément les intensités lumineuses respectives des images S" et S_{D}(λ) varient lors de leur déplacement, en fonction de la différence entre les longueurs des trajets optiques des rayons des faisceaux secondaires F3 et F5 d'une part, et F4 et F6 d'autre part, pour chaque position de l'image S' selon la direction D1.

On enregistre alors, lors du déplacement du dispositif de balayage 1, des valeurs d'éclairement lumineux pour chaque image S_{D}(λ₀) formée sur une ligne 9 de photodétecteurs de la matrice 8. La longueur d'onde dispersée λ₀ est définie par le décalage selon la direction D4 de la ligne 9 considérée, sur laquelle l'image S_{D}(λ₀) est formée. La longueur d'onde dispersée λ₀ est en fait une valeur moyenne correspondant sensiblement à la position du milieu de la largeur de la ligne 9 considérée, selon la direction D4. Les valeurs d'éclairement lumineux enregistrées correspondent à des positions successives du dispositif de balayage 1. Pour enregistrer ces positions, l'unité de calcul peut être reliée en outre à un détecteur de position du dispositif de balayage 1. On obtient alors, pour des positions successivement prises par le dispositif de balayage 1, un tableau des valeurs d'éclairement reçu par chaque photodétecteur, repérées par la position du photodétecteur dans la matrice 8.

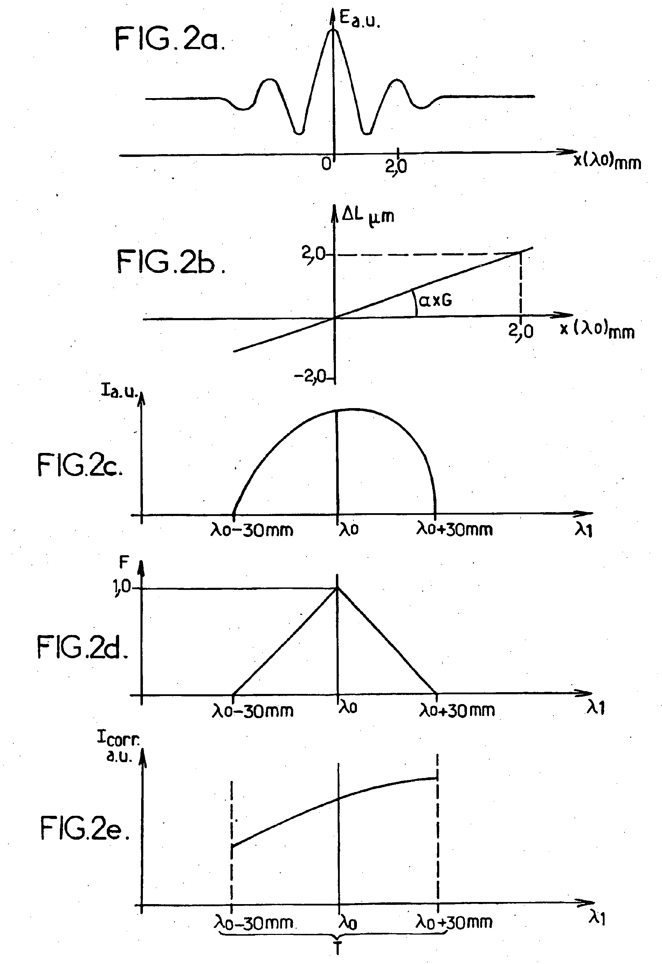

La figure 2a représente un exemple de diagramme d'éclairement E reçu par les photodétecteurs d'une ligne 9 de la matrice, associée à la longueur d'onde dispersée λ₀. x(λ₀) repère la position des photodétecteurs dans cette ligne. L'éclairement E est en unité arbitraire (a.u.). La courbe de la figure 2a est initialement définie par des points discrets correspondant à chaque photodétecteur de la ligne 9. Elle est avantageusement complétée par interpolation, d'une façon connue de l'homme du métier, pour obtenir une courbe continue.

On calcule ensuite, pour chaque ligne 9 de la matrice 8, une transformation de Fourier inverse à partir des valeurs d'éclairement reçu par chaque photodétecteur de cette ligne. Cette transformation de Fourier inverse est calculée en suivant le déplacement de l'image S_{D}(λ₀) le long de la ligne 9 associée à λ₀. Autrement dit, pour chaque position successive du système de balayage 1, on sélectionne le photodétecteur de la ligne 9 qui reçoit un éclairement correspondant à la source S. Pour ce photodétecteur sélectionné, on évalue la différence de longueur de trajet optique associée. La figure 2b illustre un exemple de variation de la différence de longueur de trajet optique Δ L en fonction de la position x(λ₀) de l'image S_{D}(λ₀) le long de la ligne 9 associée à λ₀. Cette variation est linéaire pour des miroirs 32 et 33 plans. La pente de cette variation est égale à l'angle α d'inclinaison du miroir 33, multiplié par le grandissement G de l'optique intermédiaire 10 et du système dispersif 6 entre les miroirs 32/33 et la matrice 8. A titre d'exemple, un photodétecteur situé à 20 millimètres de la ligne médiane M-M (figure 1b) de la matrice 8 parallèle à la direction D4 correspond à une différence de longueur de trajet optique ΔL de 20 micromètres. La transformation de Fourier inverse est calculée par rapport à la différence de longueur de trajet optique ΔL, évaluée pour chaque photodétecteur sélectionné. L'homme du métier comprendra que les variables conjuguées lors du calcul de la transformation de Fourier inverse sont ΔL et 2π/λ₁. On obtient alors un segment de spectre brut indiquant une intensité I pour des valeurs de longueur d'onde λ₁ dudit segment de spectre brut. Les valeurs de longueur d'onde λ₁ sont réparties autour de la longueur d'onde dispersée λ₀ associée à la ligne 9 considérée de la matrice 8. La figure 2c représente, de façon approximative, un segment de spectre brut ainsi obtenu. L'extension du segment de spectre brut de part et d'autre de λ₀ est par exemple de ± 30 nanomètres environ.

Un exemple de fonction d'appareil pour une ligne 9 de la matrice 8 est illustré par la figure 2d. Le diagramme de cette figure, ayant pour abscisse la longueur d'onde λ₁, présente une forme triangulaire centrée sur la valeur de λ₀. Cette forme résulte de la coïncidence entre la fente 4 et la ligne 9 de la matrice 8 associée à la longueur d'onde dispersée λ₀.

On divise alors l'intensité I lue sur le segment de spectre brut (figure 2c) pour chaque valeur de longueur d'onde λ₁, par la valeur de réponse d'instrument correspondant à la même longueur d'onde λ₁ (figure 2d).

On obtient alors un segment de spectre corrigé T (figure 2e), qui indique une intensité corrigée I_{corr} pour chaque valeur de longueur d'onde λ₁.

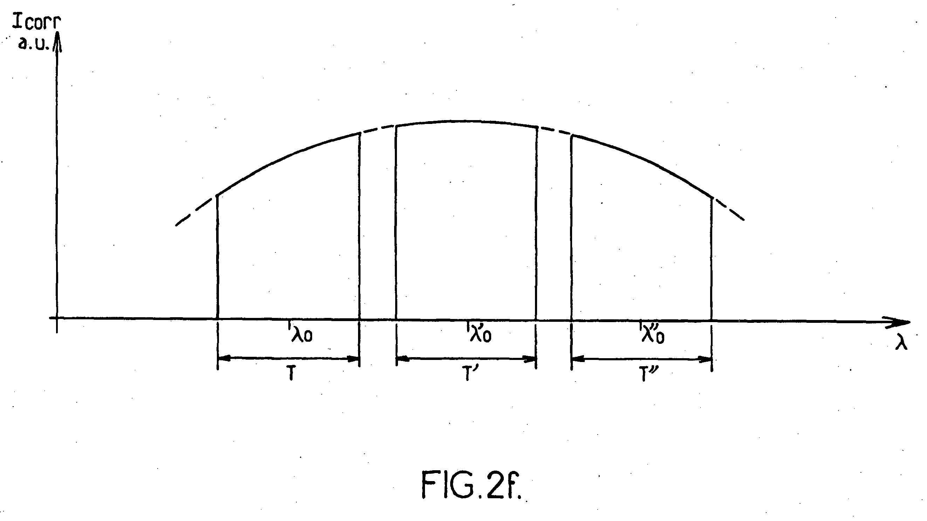

Enfin, on regroupe dans un diagramme spectral de regroupement (figure 2f), les segments de spectre corrigés obtenus respectivement pour chaque ligne de matrice 9. Ce regroupement est effectué en positionnant sur un axe de longueur d'onde unique les valeurs de longueurs d'onde dispersées λ ₀, λ₀', λ₀", ..., et en reportant autour de chacune d'elles le segment de spectre corrigé correspondant T, T', T", .... Eventuellement une interpolation ou une correction de raccordement peut être effectuée entre deux segments de spectres corrigés successifs, afin d'obtenir une courbe d'intensité spectrale globale exempte d'artefacts de reconstruction.

La résolution spectrale du spectrophotomètre est par ailleurs limitée par la dimension des miroirs 32 et 33 parallèlement à la direction principale D1. Or une augmentation de la taille des miroirs 32 et 33 entraîne une augmentation importante du coût, du poids et de l'encombrement de l'ensemble du spectrophotomètre. Un perfectionnement du spectrophotomètre précédent est maintenant décrit, qui permet d'améliorer la résolution spectrale.

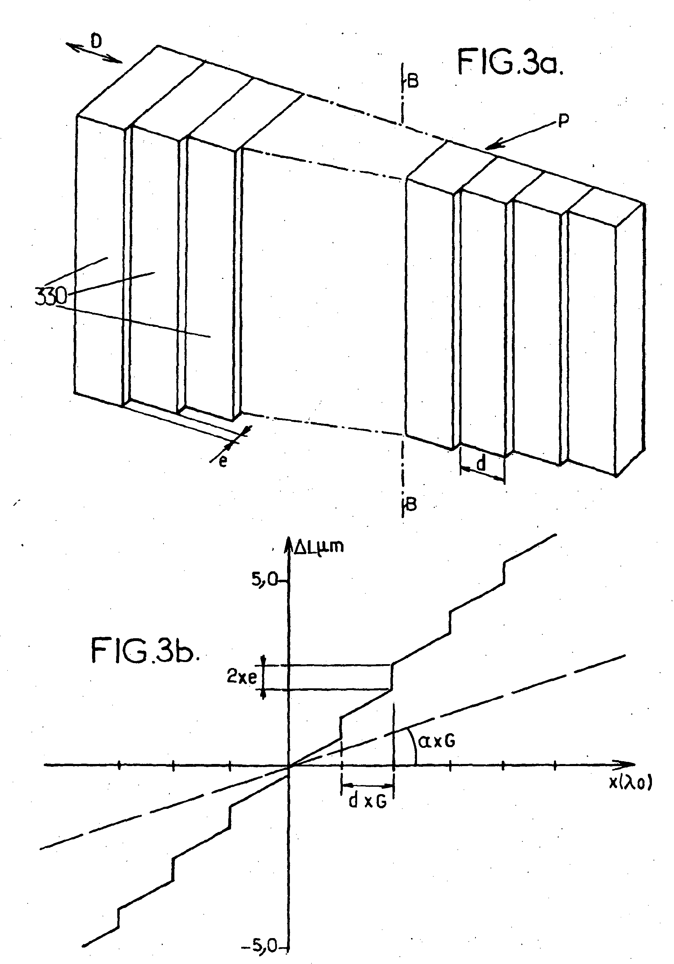

Selon ce perfectionnement, l'un des deux miroirs 32 ou 33, par exemple le miroir 32, est plan, et l'autre miroir, par exemple le miroir 33, est du type miroir à échelette, tel que représenté sur la figure 3a. Un miroir à échelette est formé de bandes planes réfléchissantes 330, rectangulaires et juxtaposées selon une direction D. Chaque bande présente une largeur d de 200 micromètres, par exemple, et une longueur égale à la dimension du miroir 33 parallèlement à l'axe B-B. Chaque bande 330 est parallèle à un plan de référence P du miroir à échelette, et est décalée par rapport au plan P d'une distance respective mesurée perpendiculairement au plan de référence. L'écart e entre les distances au plan P de deux bandes successives selon la direction D est, par exemple, de 1 micromètre. Le miroir 33 comporte par exemple 10 bandes 330.

Le miroir plan 32 est maintenu dans la position perpendiculaire à la direction D0' décrite plus haut, au sein de l'interféromètre 3. Le miroir à échelette est placé au niveau de l'axe d'inclinaison B-B, et est orienté initialement de sorte que la direction D liée au miroir est parallèle à la direction D1. Il est ensuite incliné selon l'axe B-B d'un angle α par rapport à la direction D1, compris entre 0,2 degré et 5 degrés, par exemple.

La figure 3b illustre, d'une façon analogue à la figure 2b, les variations de la différence de longueur de trajet optique pour un spectrophotomètre selon la figure 1 a qui incorpore un miroir 32 plan et un miroir 33 à échelette. La courbe obtenue est discontinue : elle est formée de marches successives respectivement associées aux bandes 330. Chaque marche a une pente par rapport à l'axe des abscisses égale à α x G, une hauteur égale à 2 x e et une longueur selon l'axe des abscisses égale à d x G.

Grâce à la largeur accrue de l'intervalle de valeurs de ΔL ainsi obtenue, la résolution du spectrophotomètre est améliorée. Mais les décalages des bandes 330 du miroir 33 engendre un sous-échantillonnage des valeurs de Δ L : les valeurs de la différence de longueur de trajet optique correspondant à des éclairements reçus par des photodétecteurs ne correspondent qu'à une partie de toutes les valeurs possibles. Lors du calcul de la transformation de Fourier inverse, ce sous-échantillonnage résulte en un repliement des segments de spectre obtenus. Ce comportement, bien connu de l'homme du métier, est un effet de filtrage dû à la largeur réduite d des bandes 330.

Pour éviter ces repliements des segments de spectre, le spectrophotomètre peut comprendre en outre un second interféromètre du type interféromètre dit «en sinus». Un tel second interféromètre comprend :
- un second dispositif de séparation par division d'intensité disposé pour séparer une partie au moins du faisceau primaire F2 entrant dans le second interféromètre en un troisième et un quatrième faisceaux secondaires ayant des directions de propagation respectives ;
- un troisième et un quatrième miroirs respectivement identiques aux miroirs 32 et 33 et disposés de façon à réfléchir respectivement le troisième et le quatrième faisceaux secondaires, pour former un troisième et un quatrième faisceaux secondaires réfléchis, les troisième et quatrième miroirs étant orientés l'un par rapport à l'autre et par rapport aux directions de propagation des troisième et quatrième faisceaux secondaires de la même façon que les miroirs 32 et 33 l'un par rapport à l'autre et par rapport aux faisceaux secondaires F3 et F4 ;
- un premier et un second miroirs cylindriques disposés de façon à réfléchir respectivement le troisième faisceau secondaire et le troisième faisceau secondaire réfléchi ;
- un second dispositif de regroupement disposé pour regrouper les troisième et quatrième faisceaux secondaires réfléchis en un second faisceau intermédiaire ayant une direction de propagation déterminée.

Le second faisceau intermédiaire correspond ainsi à une seconde figure d'interférence des troisième et quatrième faisceaux secondaires réfléchis et regroupés. Cette seconde figure d'interférence possède une direction principale de variation d'une seconde différence de longueur de trajet optique sensiblement perpendiculaire à la direction de propagation du second faisceau intermédiaire.

Le second interféromètre est aussi ajustable de sorte qu'une seconde image de la source S est formée à l'intérieur du second interféromètre, sensiblement au niveau des troisième et quatrième miroirs, et de sorte que la seconde image se déplace parallèlement à la direction principale de la seconde figure d'interférence lors d'un déplacement du dispositif de balayage **1**.

Le premier miroir cylindrique est agencé pour conférer au troisième faisceau secondaire, après réflexion sur le premier miroir cylindrique, une configuration de faisceau convergent et de faisceau parallèle selon des directions respectives perpendiculaires à la direction de propagation du troisième faisceau secondaire. Le second miroir cylindrique est agencé pour conférer au troisième faisceau secondaire réfléchi, après réflexion sur le second miroir cylindrique, une configuration de faisceau sphérique divergent.

De plus, le second interféromètre est orienté de sorte que la direction principale de la seconde figure d'interférence est sensiblement parallèle à une direction conjuguée avec la direction de la grande longueur de la fente 4.

Le spectrophotomètre comprend alors aussi :
- un second système dispersif ayant une direction de dispersion en longueur d'onde sensiblement perpendiculaire à la direction principale de la seconde figure d'interférence ou à une direction conjuguée à la direction principale de la seconde figure d'interférence, et disposé pour recevoir en entrée le second faisceau intermédiaire ; et
- une seconde matrice plane de photodétecteurs placée dans un plan conjugué avec le plan de la fente 4 au travers du second système dispersif et comprenant des lignes de photodétecteurs parallèles à une direction conjuguée avec la direction principale de la seconde figure d'interférence, les lignes de photodétecteurs de la seconde matrice étant décalées entre elles selon une direction associée à la direction de dispersion du second élément dispersif.

Selon un premier mode de réalisation du perfectionnement, le second interféromètre, le second système dispersif et la seconde matrice de photodétecteurs forment une voie optique supplémentaire disposée en parallèle à l'interféromètre 3, au système dispersif 6 et à la matrice 8. Pour cela, un séparateur principal est disposé dans le faisceau primaire F2, qui envoie une première partie du faisceau F2 dans l'interféromètre 3, et une seconde partie du faisceau F2 dans le second interféromètre. Le séparateur principal peut, notamment, être du type lame semi-réfléchissante.

Selon un second mode de réalisation du perfectionnement, le second interféromètre est intégré à l'interféromètre 3, le second système dispersif est confondu avec le système dispersif 6, et la seconde matrice de photodétecteurs est juxtaposée à la matrice 8 de sorte que les lignes de la seconde matrice sont situées dans le prolongement des lignes 9 de la matrice 8. Avantageusement, la seconde matrice et la matrice 8 sont regroupées en une matrice unique, encore désignée par matrice 8, ayant des lignes 9 de longueur accrue. Le second dispositif de séparation et le second dispositif de regroupement peuvent alors être confondus avec le dispositif de séparation 31.

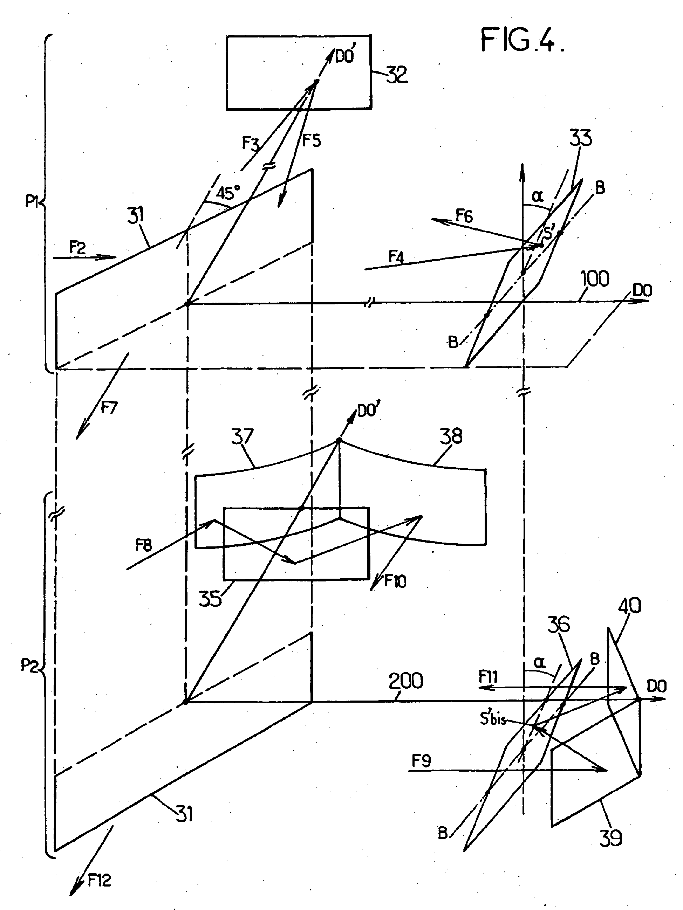

La figure 4 est un schéma optique de l'interféromètre 3 ainsi obtenu. Pour raison de clarté, ce schéma est éclaté selon la direction D1, et les deux axes 100 et 200 de direction D0 doivent être lus comme étant confondus. L'interféromètre 3 est divisé en deux parties P1 et P2 juxtaposées selon la direction D1. La partie P1 est celle décrite plus haut en relation avec la figure 1 a, comprenant les miroirs 32 et 33, ainsi qu'une première moitié du dispositif de séparation 31. Une seconde moitié du dispositif de séparation 31 se prolonge symétriquement dans la partie P2 de l'interféromètre 3. Les miroirs 32 et 33 sont limités dans la partie P1.

Lors du déplacement du dispositif de balayage 1, le faisceau primaire F2 passe successivement de la partie P1 à la partie P2. Le fonctionnement de l'interféromètre lorsque le faisceau primaire F2 est dans la partie P1 a déjà été décrit. Dans la partie P2, le miroir plan 35 et les miroirs cylindriques convexes 37 et 38 ont une fonction identique à celle du miroir 32. Le miroir 36 et les miroirs plans 39 et 40 ont une fonction identique à celle du miroir 33. Le miroir 36 peut être identique au miroir 33, en étant, par exemple, du type à échelette.

Lors du passage du faisceau primaire F2 de la partie P1 à la partie P2, l'image S' et la seconde image S'bis de la source S sont successivement formées, respectivement sur les miroirs 33 et 36. Dans la partie P2 de l'interféromètre, le dispositif de séparation 31 sépare le faisceau primaire F2 en deux faisceaux secondaires F8 et F9 respectivement incidents sur les miroirs 37 et 39. Ainsi, les faisceaux secondaires F8 et F9 sont décalés selon la direction principale D1 par rapport aux faisceaux secondaires F3 et F4. Eventuellement, un dispositif non représenté sur la figure 4 peut être disposé en entrée de la partie P2 de l'interféromètre, pour décaler les faisceaux secondaires F8 et F9, afin que ces faisceaux passent respectivement à l'extérieur des miroirs 35 et 36 avant d'être réfléchis par les miroirs 37 et 39, respectivement. Après réflexion sur le miroir 35, le faisceau secondaire F8 devient le faisceau F10, réfléchi par le miroir 38 de façon à être redirigé vers le dispositif de séparation et de regroupement 31. De même, après réflexion sur le miroir 36, le faisceau secondaire F9 devient le faisceau F11, réfléchi par le miroir 40 de façon à être aussi redirigé vers le dispositif 31. Le dispositif 31 regroupe alors, dans la partie P2 de l'interféromètre, les faisceaux F10 et F11 en un second faisceau intermédiaire F12 qui correspond à la seconde figure d'interférence, distincte de la figure d'interférence du faisceau intermédiaire F7.

Les miroirs 32, 33, 35 et 36 ainsi que les deux miroirs cylindriques convexes 37 et 38 et les deux miroirs plans 39 et 40 sont disposés de sorte que la direction principale de la seconde figure d'interférence est confondue avec ou est parallèle à la direction principale D1 de la figure d'interférence correspondant au faisceau intermédiaire F7.

Le second faisceau intermédiaire F12 traverse le système de dispersion 6 de la même façon que le faisceau intermédiaire F7, et forme, de même que ce dernier, une image de la source S. Les positions des miroirs 32 et 33 sont ajustées par rapport à celles des miroirs 35 et 36 de sorte que les trajets optiques entre d'une part, les miroirs 32 ou 33 et la matrice 8, et d'autre part les miroirs 35 ou 36 et la matrice 8, ont des longueurs sensiblement identiques, aux effets interférentiels près. Les faisceaux F7 et F12 forment alors des images S_{D}(λ) successives qui se déplacent sur une même ligne 9 de photodétecteurs lors d'un déplacement du dispositif de balayage 1. Chaque ligne 9 de photodétecteurs correspond alors pour une première moitié de sa longueur à la variation de différence de longueur de trajet optique dans la partie 1 de l'interféromètre, et pour une seconde moitié de sa longueur à la variation de différence de longueur de trajet optique dans la partie P2 de l'interféromètre.

Ainsi, les photodétecteurs respectifs des première et seconde moitiés de longueur des lignes 9 détectent des éclairements correspondant à deux figures d'interférence en quadrature. L'enregistrement des éclairements de ces deux figures d'interférence en quadrature est ensuite combiné avec le calcul de la transformation de Fourier inverse, d'une façon connue en soi. Cette combinaison permet d'éviter l'artéfact de repliement des segments de spectre.

L'invention a été décrite en détail selon le mode de réalisation préféré et selon un perfectionnement du mode de réalisation préféré. Il est entendu que de nombreuses variantes peuvent être introduites par rapport au mode de réalisation préféré ou à son perfectionnement. Il est en effet connu que des dispositifs optiques équivalents produisent des effets lumineux identiques ou pouvant être assimilés comme identiques. En particulier, on notera que des figures d'interférences identiques peuvent être obtenues de diverses manières, en combinant des modifications de la configuration des différents miroirs avec des changements de leurs positions ou orientations respectives. De même, la fente 4 peut être disposée à des endroits différents du spectrophotomètre, tout en remplissant une fonction identique. Notamment elle peut être disposée au niveau du miroir 32, auquel cas l'optique intermédiaire 10 peut être supprimée. La fente 4 peut aussi être disposée dans le faisceau primaire F2, dans l'un des faisceaux secondaires F3/F8 ou F4/F9, dans l'un des faisceaux secondaires réfléchis F5/F10 ou F6/F11, ou dans le faisceau intermédiaire F7/F12.

Enfin, dans la partie P1 de l'interféromètre de la figure 4, il pourra être avantageux d'introduire sur les trajets des faisceaux secondaires F3-F6 des miroirs analogues aux miroirs 37-40, en orientant les miroirs 32 et 33 de la même façon que les miroirs 35 et 36. Ces miroirs supplémentaires dans la partie P1 sont tous plans. Ils permettent alors aux deux parties P1 et P2 de l'interféromètre 3 de présenter des structures identiques. La seule différence entre les deux parties P1 et P2 résident alors dans la nature cylindrique convexe des miroirs 37 et 38 de la partie P2. La réalisation de l'interféromètre 3 est alors simplifiée, en permettant l'utilisation de supports de miroirs continus communs aux deux parties. Eventuellement, un dispositif continu commun de décalage des faisceaux selon l'axe B-B peut aussi être disposé en entrée de l'interféromètre 3, dans les deux parties P1 et P2. Un tel dispositif permet de décaler les faisceaux secondaires F3-F6 afin qu'ils accommodent, dans la partie P1 de l'interféromètre, des configurations repliées analogues à celles des faisceaux secondaires F8-F11 dans la partie P2 de l'interféromètre.

## Revendications

1. Spectrophotomètre comprenant :
- un dispositif de balayage optique (1) d'un champ dans lequel se trouve une source lumineuse (S) ;
- un interféromètre (3) disposé pour délivrer, à partir d'un faisceau lumineux primaire (F2) issu de la source (S) et transmis par le dispositif de balayage (1), un faisceau lumineux intermédiaire (F7) correspondant à une figure d'interférence ayant une direction principale (D1) de variation d'une différence de longueur de trajet optique sensiblement perpendiculaire à une direction de propagation du faisceau intermédiaire (F7),
le dispositif de balayage (1) et l'interféromètre (3) étant ajustables de sorte qu'une image (S') de la source (S) se déplace parallèlement à la direction principale (D1) lors d'un déplacement du dispositif de balayage (1) ;
- une fente (4) rectangulaire disposée au niveau de ladite image (S') de la source (S) ou d'une autre image (S") de la source (S) produite par une optique intermédiaire (10) facultative et placée dans le faisceau intermédiaire (F7), dans un plan sensiblement perpendiculaire à une direction de propagation d'un faisceau formant ladite image, la fente ayant une grande longueur sensiblement parallèle à la direction principale (D1);
- un système dispersif (6) comprenant un prisme ou un réseau de diffraction, et ayant une direction de dispersion en longueur d'onde (D2) sensiblement perpendiculaire à la direction principale (D1), et disposé pour recevoir en entrée le faisceau intermédiaire (F7) ; et
- une matrice plane de photodétecteurs (8) disposée dans un plan conjugué avec le plan de la fente (4) au travers du système dispersif (6), et comprenant des lignes (9) de photodétecteurs parallèles à une direction (D3) parallèle à la direction principale (D1), les lignes de photodétecteurs étant décalées entre elles selon une direction (D4) associée à la direction de dispersion (D2).

2. Spectrophotomètre selon la revendication 1, dans lequel l'interféromètre (3) comprend :
- un dispositif de séparation (31) par division d'intensité du faisceau primaire (F2) en un premier (F3) et un second (F4) faisceaux secondaires ayant des directions de propagation respectives ;
- un premier (32) et un second (33) miroirs disposés de façon à réfléchir respectivement le premier (F3) et le second (F4) faisceaux secondaires, pour former un premier (F5) et un second (F6) faisceaux secondaires réfléchis ; et
- un dispositif de regroupement disposé pour regrouper les premier (F5) et second (F6) faisceaux secondaires réfléchis, afin de former le faisceau intermédiaire (F7) ;
les premier (32) et second (33) miroirs étant orientés l'un par rapport à l'autre de sorte que la figure d'interférence résulte des premier (F5) et second (F6) faisceaux secondaires réfléchis et regroupés,
l'interféromètre (3) étant en outre ajustable de sorte que l'image (S') de la source (S) est formée à l'intérieur de l'interféromètre (3), sensiblement au niveau des premier (32) et second (33) miroirs, et
la fente (4) coupant l'un des faisceaux parmi le faisceau primaire (F2), le premier (F3) ou le second (F4) faisceau secondaire, le premier (F5) ou le second (F6) faisceau secondaire réfléchi, et le faisceau intermédiaire (F7).

3. Spectrophotomètre selon la revendication 2, dans lequel le dispositif de regroupement comprend le dispositif de séparation (31).

4. Spectrophotomètre selon la revendication 2 ou 3, dans lequel les premier (32) et second (33) miroirs sont sensiblement situés dans un plan focal d'une optique d'entrée (2) placée entre le dispositif de balayage (1) et l'interféromètre (3), ou dans un plan conjugué avec un plan focal de ladite optique d'entrée.

5. Spectrophotomètre selon l'une quelconque des revendications 2 à 4, dans lequel le premier (32) et le second (33) miroirs sont plans et présentent des inclinaisons respectives différentes, mesurées respectivement par rapport aux directions de propagation des premier (F3) et second (F4) faisceaux secondaires.

6. Spectrophotomètre selon l'une quelconque des revendications 2 à 4, dans lequel l'un (32) parmi le premier et le second miroirs est plan, et dans lequel l'autre (33) parmi le premier et le second miroirs est formé de bandes planes réfléchissantes juxtaposées (330), chaque bande étant parallèle à un plan de référence (P) dudit autre miroir et décalée par rapport au plan de référence d'une distance respective mesurée perpendiculairement au plan de référence, et dans lequel le miroir plan (32) et le plan de référence du miroir à bandes (33) présentent des inclinaisons respectives différentes, mesurées respectivement par rapport aux directions de propagation des premier (F3) et second (F4) faisceaux secondaires.

7. Spectrophotomètre selon l'une quelconque des revendications 2 à 6, comprenant en outre un second interféromètre, le second interféromètre incluant :
- un second dispositif de séparation par division d'intensité disposé pour séparer une partie au moins du faisceau primaire entrant dans le second interféromètre en un troisième (F8) et un quatrième (F9) faisceaux secondaires ayant des directions de propagation respectives ;
- un troisième (35) et un quatrième (36) miroirs respectivement identiques au premier (32) et second (33) miroirs et disposés de façon à réfléchir respectivement le troisième (F8) et le quatrième (F9) faisceaux secondaires, pour former un troisième (F10) et un quatrième (F11) faisceaux secondaires réfléchis, les troisième (35) et quatrième (36) miroirs étant orientés l'un par rapport à l'autre et par rapport aux directions de propagation des troisième (F8) et quatrième (F9) faisceaux secondaires de la même façon que les premier (32) et second (33) miroirs l'un par rapport à l'autre et par rapport aux premier (F3) et second (F4) faisceaux secondaires ;
- un premier (37) et un second (38) miroirs cylindriques disposés de façon à réfléchir respectivement le troisième faisceau secondaire (F8) et le troisième faisceau secondaire réfléchi (F10) ;
- un second dispositif de regroupement disposé pour regrouper les troisième (F10) et quatrième (F11) faisceaux secondaires réfléchis en un second faisceau intermédiaire (F12) ayant une direction de propagation déterminée,
le second faisceau intermédiaire (F12) correspondant à une seconde figure d'interférence des troisième (F10) et quatrième (F11) faisceaux secondaires réfléchis et regroupés, la seconde figure d'interférence ayant une direction principale de variation d'une seconde différence de longueur de trajet optique sensiblement perpendiculaire à la direction de propagation du second faisceau intermédiaire (F12),
le second interféromètre étant ajustable de sorte qu'une seconde image (S'bis) de la source (S) est formée à l'intérieur du second interféromètre, sensiblement au niveau des troisième (35) et quatrième (36) miroirs, et de sorte que la seconde image (S'bis) se déplace parallèlement à la direction principale de la seconde figure d'interférence lors d'un déplacement du dispositif de balayage (1),
le premier miroir cylindrique (37) étant agencé pour conférer au troisième faisceau secondaire (F8), après réflexion sur le premier miroir cylindrique, une configuration de faisceau convergent et de faisceau parallèle selon des directions respectives perpendiculaires à la direction de propagation du troisième faisceau secondaire (F8),
le second miroir cylindrique (38) étant agencé pour conférer au troisième faisceau secondaire réfléchi (F10), après réflexion sur le second miroir cylindrique, une configuration de faisceau sphérique divergent,
le second interféromètre étant orienté de sorte que la direction principale de la seconde figure d'interférence est sensiblement parallèle à une direction conjuguée avec la direction de la grande longueur de la fente (4),
le spectrophotomètre comprenant aussi :
- un second système dispersif ayant une direction de dispersion en longueur d'onde sensiblement perpendiculaire à la direction principale de la seconde figure d'interférence ou à une direction conjuguée à la direction principale de la seconde figure d'interférence, et disposé pour recevoir en entrée le second faisceau intermédiaire (F12) ; et
- une seconde matrice plane de photodétecteurs placée dans un plan conjugué avec le plan de la fente (4) au travers du second système dispersif et comprenant des lignes de photodétecteurs parallèles à une direction conjuguée avec la direction principale de la seconde figure d'interférence, les lignes de photodétecteurs de la seconde matrice étant décalées entre elles selon une direction associée à la direction de dispersion du second élément dispersif.

8. Spectrophotomètre selon la revendication 7, dans lequel :
- ledit dispositif de séparation (31) et ledit second dispositif de séparation sont confondus ;
- ledit dispositif de regroupement et ledit second dispositif de regroupement sont confondus ;
- ledit système dispersif (6) et ledit second système dispersif sont confondus ;
et dans lequel ladite image (S') et ladite seconde image (S'bis) de la source (S) sont successivement formées lors du déplacement du dispositif de balayage (1),
les premier (32), second (33), troisième (35) et quatrième (36) miroirs ainsi que les premier (37) et second (38) miroirs cylindriques étant disposés de sorte que la direction principale de ladite seconde figure d'interférence est confondue avec ou est parallèle à la direction principale de ladite figure d'interférence (D1),
les troisième (F8) et quatrième (F9) faisceaux secondaires étant décalés selon la direction principale de ladite figure d'interférence (D1) par rapport aux premier (F3) et second (F4) faisceaux secondaires, et
ladite matrice (8) et ladite seconde matrice de photodétecteurs étant juxtaposées de sorte que les lignes de ladite seconde matrice sont situées dans le prolongement des lignes (9) de ladite matrice, ou sont regroupées en une matrice unique dont chaque ligne de photodétecteurs correspond pour partie à la variation de différence de longueur de trajet optique de ladite figure d'interférence et pour partie à la variation de différence de longueur de trajet optique de ladite seconde figure d'interférence.

9. Spectrophotomètre selon l'une quelconque des revendications précédentes, comprenant en outre une unité de calcul reliée aux photodétecteurs, ladite unité de calcul comprenant des moyens pour :
- enregistrer des valeurs d'éclairement lumineux reçu par chaque photodétecteur pour des positions successives du dispositif de balayage (1) ;
- calculer une transformation de Fourier inverse à partir de valeurs d'éclairement reçu par des photodétecteurs respectifs d'une ligne (9) de matrice correspondant à une valeur déterminée de longueur d'onde dispersée (λ₀), un photodétecteur de ladite ligne étant sélectionné pour chaque position du dispositif de balayage (1) de façon à ce que la valeur d'éclairement enregistrée pour ledit photodétecteur correspond à une même source lumineuse pour toutes les positions du dispositif de balayage (1), la transformation de Fourier inverse étant calculée par rapport à la différence de longueur de trajet optique évaluée pour chaque photodétecteur sélectionné, afin d'obtenir un segment de spectre brut indiquant une intensité pour des valeurs de longueur d'onde dudit segment de spectre brut ;
- diviser, pour chaque valeur de longueur d'onde dudit segment de spectre brut, l'intensité correspondante par une valeur de réponse d'instrument associée à ladite ligne de matrice (9) et à ladite valeur de longueur d'onde, afin d'obtenir un segment de spectre corrigé ;
- regrouper plusieurs segments de spectre corrigés obtenus à partir de lignes de matrice (9) différentes, d'une manière définie à partir des valeurs de longueur d'onde des segments de spectre corrigés.

10. Spectrophotomètre selon l'une quelconque des revendications précédentes, comprenant en outre une optique de télescope (2) disposée pour recevoir en entrée un faisceau lumineux (F1) issu de la source (S) et pour délivrer en sortie le faisceau primaire (F2).

11. Spectrophotomètre selon l'une quelconque des revendications précédentes, installé à bord d'un satellite.

12. Spectrophotomètre selon la revendication 11, dans lequel l'unité de calcul est reliée aux photodétecteurs et au dispositif de balayage (1) par une transmission radio.

## Claims

1. Spectrophotometer comprising:
• a device (1) for optically scanning a field in which a light source (S) is disposed;
• an interferometer (3) arranged for producing an intermediate light beam (F7) from a primary light beam (F2) originating from the source (S) and transmitted by the scanning device (1), said intermediate light beam corresponding to an interference pattern with a main direction (D1) for a difference in length of the optical path to vary, which main difference is substantially perpendicular to a direction of propagation of the intermediate light beam (F7),
the scanning device (1) and the interferometer (3) being adjustable so that an image (S') of the source is displaced parallel with the main direction (D1) when the scanning device (1) is displaced;
• a rectangular slot (4) disposed at said image (S') of the source (S) or another image (S") of the source (S) produced by an optional intermediate optics (10) positioned in the intermediate beam (F7) in a plane substantially perpendicular to a direction of propagation of a beam forming said image, which slot has a long length substantially parallel with the main direction (D1),
• a dispersive system (6) comprising a prism or a diffraction grating, and having a dispersion direction in a wavelength (D2) substantially perpendicular to the main direction (D1), and disposed so as to receive the intermediate beam (F7) at the input; and
• a planar array of photodetectors (8) disposed in a plane conjugated with the plane of the slot (4) through the dispersive system (6) an having rows (9) of photodetectors parallel with a direction (D3) parallel with the main direction (D1), which rows of photodetectors are offset from one another in a direction (D4) which is associated with the dispersion direction (D2).

2. Spectrophotometer as claimed in claim 1, wherein the interferometer (3) comprises:
• a device (31) for separating the primary beam (F2), based on a division of intensity, into a first (F3) and a second (F4) secondary beam with respective directions of propagation;
• a first (32) and a second (33) mirror disposed so as to reflect the first (F3) and the second (F4) secondary beams to form a first (F5) and second (F6) reflected secondary beam respectively; and
• a re-grouping device disposed so as to re-group the first (F5) and second (F6) reflected secondary beams in order to form the intermediate beam (F7);
the first (32) and second (33) mirrors being oriented with respect to one another so that the interference pattern results from the first (F5) and second (F6) reflected and re-grouped secondary beams,
and the interferometer (3) is also adjustable so that the image (S') of the source (S) is formed inside the interferometer (3) substantially at the first (32) and second (33) mirrors, and
the slot (4) crosses one of the beams from among the primary beam (F2), the first (F3) or the second (F4) secondary beam, the first (F5) or the second (F6) reflected secondary beam and the intermediate beam (F7).

3. Spectrophotometer as claimed in claim 2, wherein the re-grouping device comprises the separating device (31).

4. Spectrophotometer as claimed in claim 2 or 3, wherein the first (32) and second (33) mirrors are substantially disposed in a focal plane of an inlet optics (2) positioned between the scanning device (1) and the interferometer (3) or in a plane conjugated with a focal plane of said inlet optics.

5. Spectrophotometer as claimed in any one of claims 2 to 4, wherein the first (32) and the second (33) mirrors are planar and have different respective tilt angles, measured respectively by reference to the directions of propagation of the first (F3) and second (F4) secondary beams.

6. Spectrophotometer as claimed in any one of claims 2 to 4, wherein one (32) of the first and second mirrors is planar and the other (33) of the first and second mirrors is formed by juxtaposed planar reflecting strips (330), each strip being parallel with a reference plane (P) of said other mirror and offset from the reference plane by a respective distance measured perpendicular to the reference plane, and wherein the planar mirror (32) and the reference plane of the mirror (33) comprising the strips have different respective tilt angles measured respectively by reference to the directions of propagation of the first (F3) and second (F4) secondary beams.

7. Spectrophotometer as claimed in any one of claims 2 to 6, additionally comprising a second interferometer, which second interferometer comprises:
• a second separating device operating on the basis of a division of intensity disposed so as to separate part of at least the primary beam entering the second interferometer into a third (F8) and a fourth (F9) secondary beam with different respective directions of propagation;
• a third (35) and a fourth (36) mirror identical respectively to the first (32) and second (33) mirrors and disposed so as to reflect the third (F8) and the fourth (F9) secondary beams respectively in order to form a third (F10) and a fourth (F11) reflected secondary beam, the third (35) and fourth (36) mirrors being oriented with respect to one another and with respect to the directions of propagation of the third (F8) and fourth (F9) secondary beams in the same way as the first (32) and second (33) mirrors with respect to one another and with respect to the first (F3) and second (F4) secondary beams;
• a first (37) and a second (38) cylindrical mirror disposed so as to reflect the third secondary beam (F8) and the third reflected secondary beam (F10) respectively;
• a second re-grouping device disposed so as to re-group the third (F10) and fourth (F11) reflected secondary beams into a second intermediate beam (F12) with a given direction of propagation,
the second intermediate beam (F12) corresponding to a second interference pattern of the third (F10) and fourth (F11) reflected and re-grouped secondary beams, and the second interference pattern has a main direction for a second length difference of optical path to vary, and substantially perpendicular to the direction of propagation of the second intermediate beam (F12),
the second interferometer being adjustable so that a second image (S'bis) of the source (S) is formed inside the second interferometer substantially at the third (35) and fourth (36) mirrors, and so that the second image (S'bis) is displaced parallel with the main direction of the second interference pattern during a displacement of the scanning device (1),
and the first cylindrical mirror (37) is disposed so as to impart to the third secondary beam (F8), after being reflected onto the first cylindrical mirror, a convergent beam configuration and a parallel beam configuration in respective directions perpendicular to the direction of propagation of the third secondary beam (F8),
and the second cylindrical mirror (38) is disposed so as to impart to the third reflected secondary beam (F10), after it has been reflected onto the second cylindrical mirror, a divergent spherical beam configuration,
and the second interferometer is oriented so that the main direction of the second interference pattern is substantially parallel with a direction conjugated with the direction of the long length of the slot (4),
and the spectrophotometer additionally comprises:
• a second dispersive system with a dispersion direction in wavelength substantially perpendicular to the main direction of the second interference pattern or to a direction conjugated with the main direction of the second interference pattern, and disposed so as to receive the second intermediate beam (F12) at the input; and
• a second planar array of photodetectors positioned in a plane conjugated with the plane of the slot (4) through the second dispersive system and comprising rows of photodetectors parallel with a direction conjugated with the main direction of the second interference pattern, and the rows of photodetectors of the second array are offset from one another in a direction associated with the direction of dispersion of the second dispersive element.

8. Spectrophotometer as claimed in claim 7, in which:
• said separating device (31) and said second separating device are coincident;
• said re-grouping device and said second re-grouping device are coincident;
• said dispersive system (6) and said second dispersive system are coincident;
and said image (S') and said second image (S'bis) of the source (S) are formed successively when the scanning device (1) is displaced,
the first (32), second (33), third (35) and fourth (36) mirrors as well as the first (37) and second (38) cylindrical mirrors being disposed so that the main direction of said second interference pattern coincides with or is parallel with the main direction of said interference pattern (D1),
the third (F8) and fourth (F9) secondary beams being offset in the main direction of said interference pattern (D1) relative to the first (F3) and second (F4) secondary beams, and
said array (8) and said second array of photodetectors being juxtaposed so that the rows of said second array are disposed in the extension of the rows (9) of said array or are re-grouped in a single array, each row of photodetectors of which corresponds partly to the variation in length difference of the optical path of said interference pattern and partly to the variation in length difference of the optical path of said second interference pattern.

9. Spectrophotometer as claimed in any one of the preceding claims, additionally comprising a calculating unit connected to the photodetectors, said calculating unit having means for:
• recording luminance values of light received by each photodetector for the successive positions of the scanning device (1);
• calculating an inverse Fourier transform from the luminance values of the light received by the respective photodetectors of an array row (9) corresponding to a given dispersed wavelength value (λ₀), one photodetector of said row being selected for each scanning position so that the luminance value recorded for said photodetector corresponds to a same light source for all the positions of the scanning device (1), the inverse Fourier transform being calculated in relation to the difference in length of the optical path evaluated for each selected photodetector in order to obtain a rough spectrum segment indicating an intensity for wavelength values of said rough spectrum segment;
• for each wavelength value of said rough spectrum segment, dividing the corresponding intensity by an instrument response value associated with said row (9) of the array and at said wavelength value in order to obtain a corrected spectrum segment;
• re-grouping several corrected spectrum segments obtained from different rows (9) of the array in a defined manner on the basis of wavelength values of the corrected spectrum segments.

10. Spectrophotometer as claimed in any one of the preceding claims, additionally comprising telescope optics (2) disposed so as to receive a light beam (F1) from the source (S) at the input and produce the primary beam (F2) at the output.

11. Spectrophotometer as claimed in any one of the preceding claims, installed on board a satellite.

12. Spectrophotometer as claimed in claim 11, wherein the calculating unit is connected to the photodetectors and to the scanning device (1) by a radio transmission.

## Patentansprüche

1. Spektrofotometer, das umfasst:
- eine optische Abtastvorrichtung (1) zum Abtasten eines Feldes, in dem sich eine Lichtquelle (S) befindet;
- ein Interferometer (3), das so angeordnet ist, dass es aus einem Primärlichtstrahl (F2), der von der Lichtquelle (S) ausgeht und durch die Abtastvorrichtung (1) übertragen wird, einen Zwischenlichtstrahl (F7) abgibt, der einer Interferenzfigur entspricht, die eine Hauptrichtung (D1) der Veränderung einer Längendifferenz der optischen Bahn hat, welche im wesentlichen im rechten Winkel zu einer Ausbreitungsrichtung des Zwischenlichtstrahls (F7) verläuft,
wobei die Abtastvorrichtung (1) und das Interferometer (3) dergestalt einstellbar sind, dass ein Bild (S') der Quelle (S) sich bei einer Verschiebung der Abtastvorrichtung (1) parallel zur Hauptrichtung (D1) verschiebt;
- einen rechtwinkeligen Schlitz (4), der im Bereich dieses Bildes (S') der Quelle (S) oder eines anderen Bildes (S") der Quelle (S) angeordnet ist, das durch eine fakultative optische Zwischeneinrichtung (10) erzeugt wird, die in dem Zwischenlichtstrahl (F7) in einer Ebene angeordnet ist, die im Wesentlichen im rechten Winkel zu einer Ausbreitungsrichtung eines Lichtstrahls verläuft, der das genannte Bild bildet, wobei die Längsseite des Schlitzes im Wesentlichen parallel zur Hauptrichtung (D1) verläuft;
- ein Dispersionssystem (6), das ein Prisma oder ein Beugungsgitter umfasst und eine Wellenlängen-Dispersionsrichtung (D2) hat, die im Wesentlichen im rechten Winkel zur Hauptrichtung (D1) verläuft, und das so angeordnet ist, dass es den Zwischenlichtstrahl (F7) am Eintritt aufnimmt; und
- eine ebene Fotozellendetektormatrix (8), die in einer Ebene angeordnet ist, die mit der Ebene des Schlitzes (4) durch das Dispersionssystem (6) gekoppelt ist, und Reihen (9) von Fotozellendetektoren enthält, die parallel zu einer Richtung (D3) angeordnet sind, welche mit der Hauptrichtung (D1) parallel verläuft, wobei die Reihen (9) von Fotozellendetektoren in einer Richtung (D4) zueinander versetzt angeordnet sind, die an die Dispersionsrichtung (D2) gebunden ist.

2. Spektrofotometer nach Anspruch 1, wobei das Interferometer (3) umfasst:
- eine Teilungsvorrichtung (31) durch Aufteilung der Stärke des Primärlichtstrahls (F2) in einen ersten Sekundärlichtstrahl (F3) und einen zweiten Sekundärlichtstrahl (F4) mit jeweiligen Ausbreitungsrichtungen;
- einen ersten Spiegel (32) und einen zweiten Spiegel (33), die dergestalt angeordnet sind, dass sie den ersten Sekundärlichtstrahl (F3) bzw. den zweiten Sekundärlichtstrahl (F4) reflektieren, um einen ersten reflektierten Sekundärlichtstrahl (F5) und einen zweiten reflektierten Sekundärlichtstrahl (F6) zu bilden; und
- eine Sammeleinrichtung, die zu dem Zweck angeordnet ist, um den ersten reflektierten Sekundärlichtstrahl (F5) und den zweiten reflektierten Sekundärlichtstrahl (F6) zu sammeln, um den Zwischenlichtstrahl (F7) zu bilden;
wobei der erste Spiegel (32) und der zweite Spiegel (33) zueinander dergestalt ausgerichtet sind, dass sich die Interferenzfigur aus dem ersten und dem zweiten reflektierten und gesammelten Sekundärlichtstrahl (F5) und (F6) ergibt,
wobei das Interferometer (3) ferner dergestalt einstellbar ist, dass das Bild (S') der Quelle (S) im Inneren des Interferometers (3), im Wesentlichen im Bereich des ersten Spiegels (32) und des zweiten Spiegels (33), gebildet wird, und
wobei der Schlitz (4) einen der Lichtstrahlen von dem Primärlichtstrahl (F2), dem ersten Sekundärlichtstrahl (F3) oder dem zweiten Sekundärlichtstrahl (F4), dem ersten reflektierten Sekundärlichtstrahl (F5) oder dem zweiten reflektierten Sekundärlichtstrahl (F6), und den Zwischenlichtstrahl (F7) schneidet.

3. Spektrofotometer nach Anspruch 2, wobei die Sammeleinrichtung die Teilungsvorrichtung (331) umfasst.

4. Spektrofotometer nach Anspruch 2 oder 3, wobei sich der erste Spiegel (32) und der zweite Spiegel (33) im Wesentlichen in einer Brennpunktebene einer Eintrittsoptik (2) befinden, die zwischen der Abtastvorrichtung (1) und dem Interferometer (3) angeordnet ist, oder in einer Ebene, die mit einer Brennpunktebene dieser Eintrittsoptik gekoppelt ist.

5. Spektrofotometer nach einem der Ansprüche 2 bis 4, wobei der erste Spiegel (32) und der zweite Spiegel (33) eben sind und jeweils unterschiedliche Neigungen aufweisen, jeweils gemessen in Bezug auf die Ausbreitungsrichtungen des ersten Sekundärlichtstrahls (F3) bzw. des zweiten Sekundärlichtstrahls (F4).

6. Spektrofotometer nach einem der Ansprüche 2 bis 4, wobei der eine (32) des ersten und zweiten Spiegels eben ist, und der andere (33) des ersten und zweiten Spiegels aus aneinandergefügten, ebenen, reflektierenden Streifen (330) gebildet ist, wobei jeder Streifen parallel zu einer Referenzebene (P) des genannten anderen Spiegels verläuft und in Bezug auf die Referenzebene um eine jeweilige Strecke versetzt angeordnet ist, die im rechten Winkel zu der Referenzebene gemessen wird, und wobei der ebene Spiegel (32) und die Referenzebene des aus Streifen gebildeten Spiegels (33) jeweils unterschiedliche Neigungen aufweisen, gemessen jeweils in Bezug auf die Ausbreitungsrichtungen des ersten Sekundärlichtstrahls (F3) bzw. des zweiten Sekundärlichtstrahls (F4).

7. Spektrofotometer nach einem der Ansprüche 2 bis 6, das ferner ein zweites Interferometer aufweist, wobei das zweite Interferometer umfasst:
- eine zweite Teilungsvorrichtung durch Aufteilung der Lichtstärke, die zu dem Zweck angeordnet ist, mindestens einen Teil des in das zweite Interferometer eintretenden Primärlichtstrahls in einen dritten Sekundärlichtstrahl (F8) und einen vierten Sekundärlichtstrahl (F9) mit jeweiligen Ausbreitungsrichtungen zu unterteilen;
- einen dritten Spiegel (35) und einen vierten Spiegel (36), die dem ersten Spiegel (32) bzw. dem zweiten Spiegel (33) gleichen und dergestalt angeordnet sind, dass sie den dritten Sekundärlichtstrahl (F8) bzw. den vierten Sekundärlichtstrahl (F9) reflektieren, um einen dritten reflektierten Sekundärlichtstrahl (F10) und einen vierten reflektierten Sekundärlichtstrahl (F11) zu bilden, wobei der dritte Spiegel (35) und vierte Spiegel (36) zueinander und in Bezug auf die Ausbreitungsrichtungen des dritten Sekundärlichtstrahls (F8) bzw. des vierten Sekundärlichtstrahls (F9) in der gleichen Weise ausgerichtet sind wie der erste Spiegel (32) und der zweite Spiegel (33) zueinander und in Bezug auf den ersten Sekundärlichtstrahl (F3) bzw. zweiten Sektindärlichtstrahl (F4);
- einen ersten zylinderförmigen Spiegel (37) und einen zweiten zylinderförmigen Spiegel (38), die dergestalt angeordnet sind, dass sie den dritten Sekundärlichtstrahl (F8) bzw. den dritten reflektierten Sekundärlichtstrahl (F10) reflektieren;
- eine zweite Sammeleinrichtung, die zu dem Zweck angeordnet ist, um den dritten reflektierten Sekundärlichtstrahl (F10) und den vierten reflektierten Sekundärlichtstrahl (F11) in einen zweiten Zwischenlichtstrahl (F12) mit einer bestimmten Ausbreitungsrichtung zusammenzuführen;
wobei der zweite Zwischenlichtstrahl (F12) einer zweiten Interferenzfigur des reflektierten und zusammengeführten dritten und vierten Sekundärlichtstrahfs (F10) und (F11) entspricht, wobei die zweite Interferenzfigur eine Hauptrichtung der Veränderung um eine Sekunde Längenunterschied der optischen Bahn hat, welche im wesentlichen im rechten Winkel zu der Ausbreitungsrichtung des zweiten Zwischenlichtstrahls (F12) verläuft,
wobei das zweite Interferometer dergestalt einstellbar ist, dass ein zweites Bild (S'bis) der Quelle (S) im Inneren des zweiten Interferometers, im Wesentlichen im Bereich des dritten Spiegels (35) und des vierten Spiegels (36), gebildet wird, und dass sich das zweite Bild (S'bis) bei einer Verschiebung der Abtastvorrichtung (1) parallel zur Hauptrichtung der zweiten Interferenzfigur verschiebt,
wobei der erste zylinderförmige Spiegel (37) zu dem Zweck ausgeführt ist, dem dritten Sekundärlichtstrahl (F8) nach dem Reflektieren an dem ersten zylinderförmigen Spiegel gemäß jeweiligen Richtungen, die im rechten Winkel zur Ausbreitungsrichtung des dritten Sekundärlichtstrahls (F8) verlaufen, eine Konfiguration eines konvergierenden Strahls und eines parallelen Strahls zu verleihen, wobei der zweite zylinderförmige Spiegel (38) zu dem Zweck ausgeführt ist, dem dritten reflektierten Sekundärlichtstrahl (F10) nach dem Reflektieren an dem zweiten zylinderförmigen Spiegel eine Konfiguration eines kugelförmig divergierenden Strahls zu verleihen,
wobei das zweite Interferometer dergestalt ausgerichtet ist, dass die Hauptrichtung der zweiten Interferenzfigur im Wesentlichen parallel zu einer Richtung verläuft, die mit der Richtung der Hauptlänge des Schlitzes (4) gekoppelt ist,
wobei das Spektrofotometer ferner umfasst:
- ein zweites Dispersionssystem, dessen Wellenlängen-Dispersionsrichtung im Wesentlichen im rechten Winkel zur Hauptrichtung der zweiten Interferenzfigur oder zu einer Richtung, die mit der Hauptrichtung der zweiten Interferenzfigur gekoppelt ist, verläuft, und das so angeordnet ist, dass es den zweiten Zwischenlichtstrahl (F12) am Eintritt aufnimmt; und
- eine zweite ebene Fotozellendetektormatrix, die in einer Ebene angeordnet ist, die mit der Ebene des Schlitzes (4) durch das zweite Dispersionssystem gekoppelt ist, und Reihen von Fotozellendetektoren enthält, die parallel zu einer Richtung angeordnet sind, welche parallel zur Hauptrichtung der zweiten Interferenzfigur verläuft, wobei die Reihen von Fotozellendetektoren in einer Richtung zueinander versetzt angeordnet sind, die mit der Dispersionsrichtung des zweiten Dispersionselements verbunden ist.

8. Spektrofotometer nach Anspruch 7, bei dem:
- die Teilungsvorrichtung (31) und die genannte zweite Teilungsvorrichtung zusammenfallen;
- die Sammeleinrichtung und die zweite Sammeleinrichtung zusammenfallen;
- das Dispersionssystem (6) und das zweite Dispersionssystem zusammenfallen;
und bei dem das Bild (S') und das zweite Bild (S'bis) der Quelle (S) bei der Verschiebung der Abtastvorrichtung (1) nacheinander gebildet werden,
wobei der erste Spiegel (32), zweite Spiegel (33), dritte Spiegel (35) und vierte Spiegel (36) sowie der erste zylinderförmige Spiegel (37) und zweite zylinderförmige Spiegel (38) dergestalt angeordnet sind, dass die Hauptrichtung der zweiten Interferenzfigur mit der Hauptrichtung der genannten Interferenzfigur (D1) zusammenfällt oder parallel verläuft,
wobei der dritte Sekundärlichtstrahl (F8) und vierte Sekundärlichtstrahl (F9) zu dem ersten Sekundärlichtstrahl (F3) und zweiten Sekundärlichtstrahl (F4) in der Hauptrichtung dieser Interferenzfigur (D1) versetzt angeordnet sind, und
wobei die Fotozellendetektormatrix (8) und die zweite Fotazellendetektormatrix dergestalt aneinandergefügt sind, dass die Reihen von Fotozellendetektoren dieser zweiten Fotozellendetektormatrix sich in der Verlängerung der Reihen (9) dieser Matrix befinden oder zu einer einzigen Matrix zusammengenommen sind, bei der jede Reihe von Fotozellendetektoren zum Teil der Veränderung der Längendifferenz der optischen Bahn dieser Interferenzfigur und zum Teil der Veränderung der Längendifferenz der optischen Bahn dieser zweiten Interferenzfigur entspricht.

9. Spektrofotometer nach einem der vorherigen Ansprüche, das ferner eine mit den Fotozellendetektoren verbundene Recheneinheit aufweist, wobei die Recheneinheit Mittel enthält, um:
- Werte der Lichtstärke, die von jedem Fotozellendetektor für aufeinander folgende Positionen der Abtastvorrichtung (1) empfangen wurden, aufzuzeichnen;
- eine inverse Fourier-Transformation zu berechnen, und zwar aus Lichtstärkewerten, die von den jeweiligen Fotozellendetektoren einer Matrixreihe (9) empfangen wurden und einem bestimmten Dispersionswellenlängenwert (λ₀) entsprechen, wobei für jede Position der Abtastvorrichtung (1) ein Fotozellendetektor dieser Reihe ausgewählt wird, so dass der für diesen Fotozellendetektor aufgezeichnete Lichtstärkewert für alle Positionen der Abtastvorrichtung (1) der gleichen Lichtquelle entspricht, wobei die inverse Fourier-Transformation in Bezug auf die für jeden ausgewählten Fotozellendetektor bewertete Längendifferenz der optischen Bahn berechnet wird, um ein Segment des Gesamtspektrums zu erhalten, das eine Stärke für Wellenlängenwerte dieses Segments des Gesamtspektrums angibt;
- für jeden Wellenlängenwert dieses Segments des Gesamtspektrums die entsprechende Stärke durch einen Ansprechwert des mit dieser Matrixrcihe (9) und mit diesem Wellenlängenwert verbundenen Instruments zu teilen, um ein korrigiertes Spektralsegment zu erhalten;
- mehrere korrigierte Spektralsegmente, die auf Basis von verschiedenen Matrixreihen (9) erhalten wurden, in einer Weise zusammenzufassen, die aus Wellenlängenwerten der korrigierten Spektralsegmente bestimmt wird.

10. Spektrofotometer nach einem der vorherigen Ansprüche, das ferner eine Teleskopoptik (2) aufweist, die zu dem Zweck angeordnet ist, am Eingang einen Lichtstrahl (F1) aufzunehmen, der von der Quelle (S) ausgeht, und am Ausgang den Primärlichtstrahl (F2) abzugeben.

11. Spektrofotometer nach einem der vorherigen Ansprüche, das an Bord eines Satelliten eingebaut ist.

12. Spektrofotometer nach Anspruch 11, bei dem die Recheneinheit mit den Fotozellendetektoren und mit der Abtastvorrichtung (1) durch Funkübertragung verbunden ist.
